(19) Europäisches Patentamt
European Patent Office
Office européen des brevets

(11) **EP 1 460 388 A2**

(12) **EUROPÄISCHE PATENTANMELDUNG**

(43) Veröffentlichungstag:
**22.09.2004 Patentblatt 2004/39**

(51) Int Cl.7: **G01D 5/249**

(21) Anmeldenummer: **04005511.3**

(22) Anmeldetag: **09.03.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(30) Priorität: **18.03.2003 DE 10312045**

(71) Anmelder: **Rodi, Anton**
**69181 Leimen (DE)**

(72) Erfinder: **Rodi, Anton**
**69181 Leimen (DE)**

(54) **Messsystem zur Absoluterfassung von Winkeln und Wegen**

(57) Es wird ein Absolutmesssystem zur Bestimmung von Winkeln oder Wegen beschrieben. Der Messgeber dieses Systems wird im Normalbetrieb von einer Spannungsversorgung (Netz) versorgt. Der Messgeber wird bei Ausfall der Spannungsversorgung auf einen Hilfsnetzbetrieb mit geringerem Energieverbrauch umgeschaltet. In dieser Betriebsart ermittelt der Messgeber nur einen Grobwert des Messwerts und speichert diesen ab.

Zur Aufrechterhaltung des Hilfsnetzbetriebs ist ein dem Messgeber zugeordneter aufladbarer Speicher vorgesehen.

Figur 1

EP 1 460 388 A2

**Beschreibung**

Im industriellen Einsatz sind derzeit überwiegend Winkel- und Wegmesssysteme bekannt, die inkrementell die Relativverstellung der Messeinrichtung erfassen, sowie zu einem vorher bestimmten oder eingegebenen Referenzwert richtungsabhängig addieren und so den bezogenen Absolutwert ermitteln. Der Nachteil besteht darin, dass die absolute Position nach Netzabschaltung oder Netzausfall verloren geht und es einer neuen Referenzbestimmung bzw. Referenzeingabe bedarf. Auch sind diese Messsysteme gegenüber Störgrößen und transienten Fehlfunktionen sehr empfindlich und damit unsicher.

Bei Längenmesssystemen hat man dieses Problem etwas entschärft, in dem man eine mehr oder weniger aufwendige und definierte Referenzspur auf den Maßstab aufbrachte, die die Referenzfahrt erleichterte und eine eingeschränkte Überprüfung der Messwerte erlaubte.

Bei Winkelmesssystemen bzw. Drehgebern hat man bei jeder Umdrehung den Referenzimpuls bei der Referenzfahrt herangezogen und so den begonnen Absolutwert bestimmt und auch dabei überprüfen bzw. korrigieren können. Will man aber die Umdrehungen selbst, d. h. das Vielfache von $360° = 2\pi$ erfassen, so hat man weiter Maßnahmen für dies Multiturngeber zu treffen. Entweder wird ein separates Getriebe in das Messsystem eingebaut, um dessen Position mit Stellungssensoren separat zur Erfassung der zurückgelegten ganzen Umdrehungen zu erfassen, oder es wird eine Batterie verwendet, die es gestattet, ein separat eingebautes Umdrehungsmesssystem bei Netzausfall mit Strom sparenden Sensoren und Zähllogik zu versorgen und unverlierbar zu speichern. Die Getriebe sind sperrig groß, begrenzen die Lebensdauer, sowie die erfassbaren Umdrehungspositionen und sind auch aufwendig durch zusätzliche Sensorik. Das separate Umdrehungsmesssystem, überwiegend mit Permanentmagneten und mittels magnetisch leitfähigen Segmentscheiben, sowie Reedkontakten mit Zähllogik ausgestattet, ist ebenfalls sperrig groß und hat eine begrenzte Lebensdauer durch die mechanischen Kontakte sowie kritische Batterielebensdauer am temperaturbehafteten Einbauort für langlebige Industriemessgeber, z. B. bei Elektromotoren. Bei Winkelmesssystemen hat man auch verschiedentlich das Getriebe bzw. die Batterie zu vermeiden gesucht, in dem man spezielle Vorrichtungen mit Permanentmagneten und Spulen so anordnete, dass die Schaltenergie durch das sich ändernde Magnetfeld zur Positionszählung der Umdrehung und Speicherung des Zählerstandes verwendet wurde. Nähere Angaben hierzu sind z. B. aus der Patenschrift Nr. (wird nachgereicht) zu entnehmen. Aber auch diese Messvorrichtungen sind sperrig groß und haben durch die zu verwendenden speziellen elektronischen Flash-Speicherbausteine begrenzte Lebensdauer und sind daher auch wenig verbreitet.

Dem zunehmenden Wunsch nach Absolutmesssystemen, die zumindest die Referenzfahrten ersparen und die weitestgehend störungsfreie Messwerte gesichert erfassen, sowie zur Datenübertragung bereitstellen folgend, sind in den letzten Jahren neue Absolutmesssysteme entwickelt und auf den Markt gebracht worden. So wird in der Patentschrift DE 19505176A1 ein optisches Verfahren beschrieben, das den in einer Linie aufgebrachten m-Sequenz-Sode verwendet. Aber auch für magnetische Längenmesssysteme hat man einen auf einer separaten Spur aufgebrachten PCR-Code verwendet. Abgesehen von dem Problem, dass für jede Maßstabslänge die Codelänge zu bestimmen ist, sind die magnetischen Maßstäbe sperrig groß (ca. 20mm Breite x 2 mm Höhe) und aufwendig in der Herstellung. Auch sind die Messgeber in den Abmessungen von der Codelänge und Magnetpolteilung abhängig, z. B. 11 Bit x 5mm $\geq$ 55mm lang und weisen auch von der Codelänge abhängige Variationen der Sensoranordnungen sowie unterschiedliche Auswertelektroniken für die unterschiedlichen Codefolgen auf.

Für Winkelmesssysteme kommt noch erschwerend dazu, dass die Codeauswahl mit Anfang und Ende zyklisch fortlaufend gewählt und die Codelänge sowie Codeteilung auf den Durchmesser der Maßstabsscheibe abgestimmt ausgeführt werden muss. Dies erlaubt nur ein System mit einem fest gewählten Durchmesser und bedarf stets einer neuen Messgeberausführung, wenn der Durchmesser sich ändert. Zusätzlich bleibt nach wie vor die unbefriedigend gelöste Erfassung von Mehrfachumdrehungen, die z. B. in der Robotik eine zunehmende Bedeutung erhält.

Der Erfindung liegt die Aufgabe zur Grunde Abhilfe für die vorgenannten Unzulänglichkeiten und eine durchgehende Lösung für zukunftgerichtete Absolutmesssysteme für Winkel und Wege zu schaffen. Erreicht wird dies durch die Merkmale des Anspruchs 1.

Vorzugsweise wird hierbei eine neuartige Methode zur Bildung von Absolutwerten für Winkel und Wege nach Schutzrechtsanmeldung 103 120 45.9 einbezogen, bei der bei fehlender Netzversorgung nur die Sensoranordnung zur Erfassung von Teilstrecken versorgt werden muss. Dies geschieht nun gemäß der Erfindung mit einer aufladbaren und zur Messeinrichtung gehörenden gespeicherten Hilfsenergie: Gegenstand der Hauptanmeldung ist ausführlicher gesagt ein Messsystem zur Absolutwerterfassung von Winkeln und Wegen, bei dem diese von einer Sensoranordnung erfasst werden und bei dem der Maßstab aus wenigstens zwei in gleicher Weise zur Absolutwerterfassung ausgebildeten Teilstrecken zusammengesetzt ist. Bei diesem System ist auf dem Maßstab mindestens eine geeignete Spur zur Bestimmung des Absolutwerts der jeweils erreichten Teilstrecke mittels der Sensoranordnung vorgesehen und es sind Schaltmittel vorgesehen, die aus dem Absolutwert der Teilstrecke und dem ermittelten Absolutwert innerhalb der Teilstrecke den Gesamtabsolutwert zur Weiterverarbeitung zur Verfügung stellen. Die Versorgung des Systems erfolgt aus einem Netz. Es ist ferner eine Schaltungsanordnung vorgesehen, die bei Ausfall des Netzes auf Hilfsnetzbetrieb umschaltet. In dieser Betriebsart wird dann die Sensorenanordnung nur zur Bestimmung des Absolutwerts der jeweils errichten Teilstrecke benutzt. Grundsätzlich ist die Erfindung bei allen Absolutmesssystemen anwendbar, die bei Netzausfall mindestens die absolut kodierten Teilstrecken mit Sensor- und zugehöriger Schaltungsanordnung Strom sparen erfassen.

Die nach der erwähnten Schutzrechtsanmeldung ausgeführten Absolutmesssysteme können sehr klein und einbaugerecht in Aktuatoren (Elektromotoren; mechanische, elektrische, pneumatische und hydraulische Stellglieder) sowie Geräten und Maschinen untergebracht werden. Die zunehmende Verkleinerung der Halbleiterstrukturen wird in absehbarer Zeit die Unterbringung des gesamten Absolutmesssystems, einschließlich des Sensors auf einer Chipgröße ermöglichen. Die Unterbringung der aufladbaren und gespeicherten Hilfsenergie wird zunehmend außerhalb des direkten Einbauortes der Messeinrichtung erfolgen. Dies allein schon wegen der beengten Einbauverhältnisse am Messort und den dort oft herrschenden Umweltbelastungen wie z. B. hohe Temperaturen. Auf jeden Fall soll sich die zur Messeinrichtung gehörende aufladbare Hilfsenergie noch vor der ersten Trennstelle, z. B. Stekkerbindung, in der Netzzuleitung zu der übergeordneten Steuereinrichtung befinden. Damit wird sicher gewährleistet, dass bei Auftrennung der externen Netzverbindung zur Steuereinrichtung keine gespeicherten Messdaten verloren gehen. Vorteilhaft bietet sich an, die aufladbare Hilfsenergie in das Gehäuse der ersten steckbaren Trennstelle unterzubringen.

Selbstverständlich sind Unterbringungsorte für die aufladbare Hilfsenergie im Messsystemgehäuse selbst vorteilhaft, wenn Platz und Umgebungsbedingungen nicht störend sind. Auch wird es vielfach zweckmäßig sein, unmittelbar neben dem begrenzten Einbauort des Absolutmesssystems die aufladbare Hilfsenergie in einem gesonderten Gehäuse einzubauen und über möglichst kurze Kabelstecker mit dem Messsystem zu verbinden. Vor allem, wenn keine leitungsgebundene externe Netzenergie zugeführt wird, kann ein separates Gehäuse für die aufladbare Hilfsenergie zusätzliche Ausgestaltungen beinhalten, um die nichtleitungsgebundene externe Energie mit zur Aufladung der Hilfsenergie zu verwenden. Dies kann z. B. mittels Strahlungsenergie von elektromagnetischen Wellen für Nach- und Fernbereich geschehen oder auch mittels transformatorischer Kopplung von Wechselströmen, bzw. durch einen Verschiebungsstrom sich gegenseitig induzierender elektrischer und magnetischer Felder. Zu den elektromagnetischen Wellen zur Energieübertragung gehören auch die Lichtstrahlen, wie die Sonnenstrahlen, aber auch z. b. Lichtstrahlen, die für Menschen im sichtbaren und unsichtbaren Frequenzspektrum liegen. Zu der Aufladung der Hilfsenergie können alle physikalischen Wandlungsprinzipien einbezogen werden, die zur elektrischen Ladung der Hilfsenergie mit praktikablen Ausführungen in Betracht kommen. So soll auch ausdrücklich hier die Wandlung der Bewegungsenergie in elektrische Ladung zählen, die aus der Relativbewegung zwischen Messgeber und einem Maßstab mit wechselnden Magnetpolen durch Induktionswirkung mit mindestens einem Spulensystem gewonnen werden kann. Je nach Einbaubedingungen und Umweltverhältnissen sind eine Vielzahl von physikalischen Wirkprinzipien für nicht leitungsgebundene Aufladungen der Hilfsenergie möglich, wodurch wegen des geringen Energieverbrauchs der gewählten Sensoranordnung die Zählung der Teilstrecken ermöglicht wird. Z. B. ist der Einsatz bekannter Solarzellen- oder sogar Funkenergie-Wandler zur stets ausreichenden Wiederaufladung in der erfinderischen Ausgestaltung des Messsystems möglich.

Die ausreichende Wiederaufladung der Hilfsenergie im Messsystem ist sehr hilfreich für die möglichst klein zu wählende Ladekapazität. Diese Grundspeicherung der Ladung der Hilfsenergie ist bestimmend für die Größe\volumen des Energieträgers, aber auch für die Dauer der Reserve, wenn keine ausreichende Wiederaufladung möglich ist. Entscheidend hierbei ist, dass die übertragbare Energie $E = u * i * t = P * t$ ausreichend ist, so dass möglichst ausreichend Energie für den Einsatzfall im Messsystem vorhanden ist. Als Richtgröße für die Auswahl der Baugröße der Hilfsenergie, z. B. mittels wiederaufladbarer Batterie, ist der Benutzungszeitraum von ca. 10 Jahren. Wenn z. B. die Energie der Wiederaufladung x % des Gesamtenergiebedarfs ausmacht, so ist die Ladekapazität des Hilfsenergieträgers:

$$Q = (1 - x) * i * t;$$

wobei

i der Strom der Messanordnung ist und
t deren Einsatzzeit bedeutet.

Bei x 0 50% und

$$i = 10 \mu A$$

$$t = 365 \text{ Tage/Jahr} * 24h/\text{Tag} * 10 \text{ Jahre}$$

$$t = 87,6 * 10^3 \text{ h}$$

$$Q = (1 - x) * i * t = 0,5 * 10 - 5A * 87,6 * 10^3 h$$

$$Q = 43,8 * 10 - 2 * A * h = 438mAh$$

Diese Ladekapazität erlaubt z. B. die Verwendung von knopfzellengroßen Batterien, die baulich gut und klein in z. B. einem Steckergehäuse unterzubringen sind. Wesentlich dabei ist, die Sensoranordnung mit möglichst geringen Strombedarf auszulegen und die Energie für die Weiederaufladung der Hilfsenergie/Batterie möglichst nach dem Leistungsbedarf zu halten. Hierdurch wird die benötigte Baugröße/Ladekapazität klein gehalten und ist für Einsatz-Notfälle dimensioniert.

Es sind verschiedene Anordnungen der aufladbaren Hilfsenergie möglich, wobei die praktikabel nutzbaren Ausführungen sich stark nach Kosten, den Einsatz- und Sicherheitsbedingungen richten. Beispielhaft sollen folgende Anordnungen eingesetzt werden:

- wiederaufladbare Batterie

- aufladbarer Kondensator

- aufladbarer Kondensator mit wiederaufladbarer Batterie

- aufladbarer Kondensator mit nicht aufladbarer Batterie

Die wiederaufladbare Batterie wird die am meisten und bevorzugte Version für gängige Winkel- und Wegmesssysteme sein, vor allem dort, wo eine leitungsgebundene Netzversorgung zur Verfügung steht. Diese Anordnung ist besonders vorteilhaft, wenn noch eine externe Hilfsenergie zusätzlich gebraucht wird. Diese redundante Anordnung ist "Einfehlersicher" und erlaubt bei Ausfall den gegenseitigen Austausch/Reparatur der Hilfsenergie des Messsystems und der externen Hilfsenergie.

Der aufladbare Kondensator allein als Hilfsenergie kommt dann kostengünstig in Betracht, wenn die möglichen Netzunterbrechungen nur ca. kleiner 1 Stunde betragen, aber auch dann, wenn der Verlust der Absolutposition nur für kurze Unterbrechungen nicht erlaubt wird und bei längeren Netzausfällen durchaus eine Referenzbestimmun der Messeinrichtung durchgeführt werden kann.

Die wiederaufladbare Batterie mit aufladbarem Kondensator ist dann vorteilhaft, wenn keine externe Hilfsenergie vorhanden ist. Die Anordnung ist redundant im Fehlerfalle und erlaubt den eventuell notwendigen Austausch der Batterie, ohne Verlust von Messdaten. Zudem kann die Batterie entsprechend dem Kondensator kleiner dimensioniert werden.

Der aufladbare Kondensator in Kombination mit einer nicht aufladbaren Batterie ist eine erwägenswerte Alternative, um Kosten zu sparen. Diese Version bietet sich besonders an, wenn nur in Ausnahmefällen eine länger Unterbrechung der Netzversorgung erwartet wird.

Befindet sich im Steuersystem außerhalb des Absolutmesssystems zusätzlich eine externe Hilfsenergie, so kann die aufladbare und zum Messsystem gehörende Hilfsenergie besonders klein dimensioniert sein. Nur für den Fall der üblicherweise kurzen Trennung der externen Hilfsenergie vom Messsystem, z. B. bei Auftrennung des Steckers oder Reparaturen/Austausch im Servicefall, ist die zum Messsystem gehörende und aufladbare Hilfsenergie auszulegen.

Bei der redundanten Kombination der externen Hilfsenergie mit der zum Messsystem gehörenden und aufladbaren Hilfsenergie ist zweckmäßigerweise eine wiederaufladbare kleine Batterie bzw. der aufladbare Kondensator zu verwenden, wenn nur kurze Trennungen von der externen Hilfsenergie zu erwarten sind. Aber auch in solchen Anordnungen ist stets auf die geringe Stromentnahme des Messsystems bei Netzunterbrechungen zu achten, da auch die externe Hilfsenergie eine begrenzte Ladekapazität aufweist und für eine Vielzahl von Sensoren sowie sonstige Steuerungen zur Datensicherung eingesetzt wird, z. B. bei mehrachsigen Robotern.

Die zum Absolutmesssystem gehörende wiederaufladbare Hilfsenergie bietet den zusätzlichen Vorteil, den industrietauglichen Einsatz der Funkübertragung von Messdaten. Dies reduziert nicht nur den teuren Kabel- sowie Steckeraufwand zur Übertragung der Messdaten, es erspart auch die erheblichen Aufwendungen für Bus-Systeme in verteilten Steuersystemen. Zusätzlich wird die Problematik bei bewegten Absolutmessgebern mit aufwendigen Kabelführungen und Schädigungen dieser bei Wechselbelastungen beseitigt, bzw. erheblich reduziert. Selbst wenn eine nicht leitungsgebundene Hilfsenergie z. B. bei einem intensiven Messdatenaustausch nicht ausreichend ist, so ist lediglich der Kabelaufwand für die Netzversorgung noch aufzubringen. Dies sind lediglich zwei Versorgungsleitungen, da sogar die eventuell vorhandene externe Hilfsenergie darüber den Absolutmessgeber speisen kann. Diese zwei Leitungen sind ohne besondere Schirmmaßnahmen busförmig in Steuerungen zu den Absolutmessgebern verlegbar. Nicht nur die dünnen Leitungen sind flexibel und Platz sparend in Geräten und Maschinen unterzubringen, auch die Anfälligkeit bei Wechselbelastung wird erheblich reduziert und die Kabel- sowie Steckerkosten werden vorteilhaft gesenkt.

Anhand der Zeichnung werden Ausführungsbeispiel der Erfindung erläutert und die erfinderische Ausgestaltung näher beschrieben.

Es zeigen:

Fig. 1 ein Ausführungsbeispiel mit der aufladbaren Hilfsenergie im Messgeber

Fig. 2 ein Ausführungsbeispiel mit ausgelagerter Hilfsenergie

Fig. 3 ein Ausführungsbeispiel mit Signalübertragung per Funk

Fig. 4 ein Ausführungsbeispiel ohne Verbindungsleitungen zwischen Messgeber und der Systemsteuerung

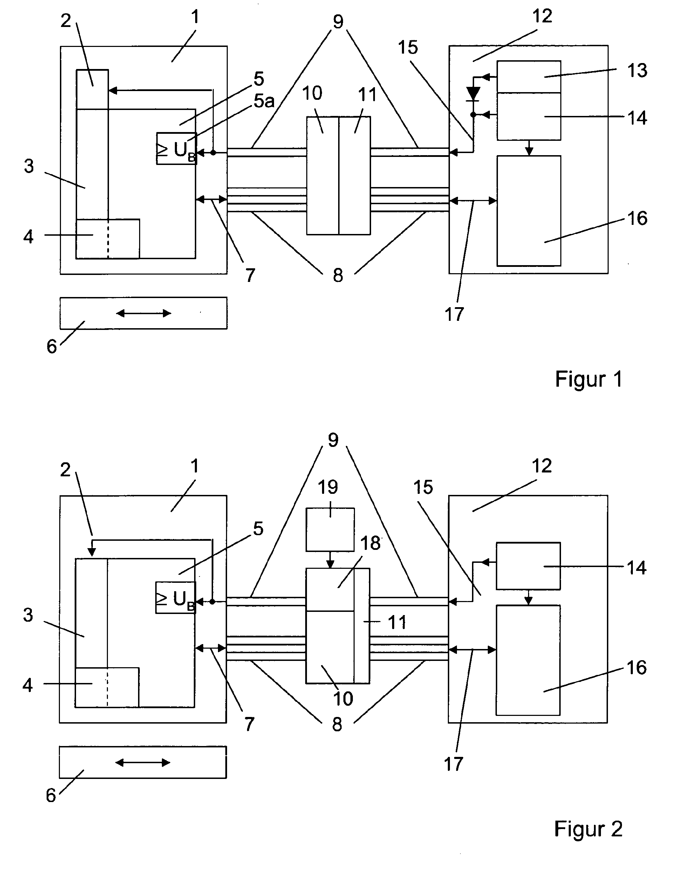

In Fig. 1 ist mit 1 ein Absolutmessgeber bezeichnet. Er weist eine wiederaufladbare Hilfsenergie z. B. eine wiederaufladbare Batterie 2 auf. Eine Logik 3 dient zur Erfassung der Teilstrecken. Mit 4 sind die Sensorenanordnungen für beide Absolutwerte bezeichnet. Ein Block 5 enthält die Logik der Messsignalverarbeitung und Messsignalübertragung. Der sich bewegende Maßstab, über dessen Spuren die beiden Messwerte bestimmt werden, ist mit 6 bezeichnet. Die vom Messwertgeber 1 übertragenen Messergebnisse werden über den seriellen Messdatenaustausch 17 auf der Steuerungsseite einer Steuerungselektronik 16 zur Auswertung und Verarbeitung der Messergebnisse zugeführt.

Bei 7 werden die Messdaten über Leitungen 8 zu einer Systemsteuerung 12 übertragen und dort entsprechend umgesetzt. Die Versorgung des Messgebers 1 geschieht über Leitungen 9. In die Übertragungsleitungen 8, 9 ist ein Stecker 10/11 eingeschaltet.

Auf der Seite der Systemsteuerung 12 ist eine Netzversorgung 14 vorgesehen, die über die Netzeinspeisung 15 und die Übertragungsleitungen 9 den Messwertgeber versorgt. Hierdurch wird auch die Batterie 2 geladen.

Bei Netzausfall kann eine vorhandene Hilfsenergie 13 die Versorgung des Messgebers 1 übernehmen. Fällt auch diese aus oder wird der Stecker 10/11 getrennt, so bleibt der Messgeber 1 nur noch hinsichtlich der Bestimmung der Teilstrecken aktiv. Dieser stromsparende Einsatz kann durch die Versorgung durch die entsprechend bemessene Hilfsenergie 2 für lange Zeit sicher gestellt werden. Die Umschaltung auf diesen Notfall wird durch einen Vergleicher 5a bewirkt.

Das Ausführungsbeispiel der Fig. 2 unterscheidet sich von dem der Fig. 1 dadurch, dass die aufladbare Hilfsenergie 2 der Fig. 1 als aufladbare Hilfsenergie 18 außerhalb des Messwertgebers 1 und zwar im Messwertgeber nahen Steckerteil 10 angeordnet ist. Zu deren Aufladung ist eine Aufladevorrichtung 19 am Stecker angebaut oder in ihn integriert. Die übrigen Bauelemente tragen die gleichen Bezugszeichen wie in Fig. 1. Die Hilfsenergie wird im Falle des Netzausfalls über die linke Hälfte der Leitung 9 und die Leitung 2' dem Messwertgeber 1 zu dessen eingeschränktem Betrieb zugeführt. Eine externe Hilfsenergie wie bei 14 in Fig. 1 ist hier nicht vorgesehen. Die Aufladevorrichtung 19 bezieht die Energie aus einer der oben erläuterten Möglichkeiten. Die Leiter 8 zur Datenübertragung können zumindest zwischen Steckerteil 10 und Messwertgeber 1 auch Lichtleiter sein.

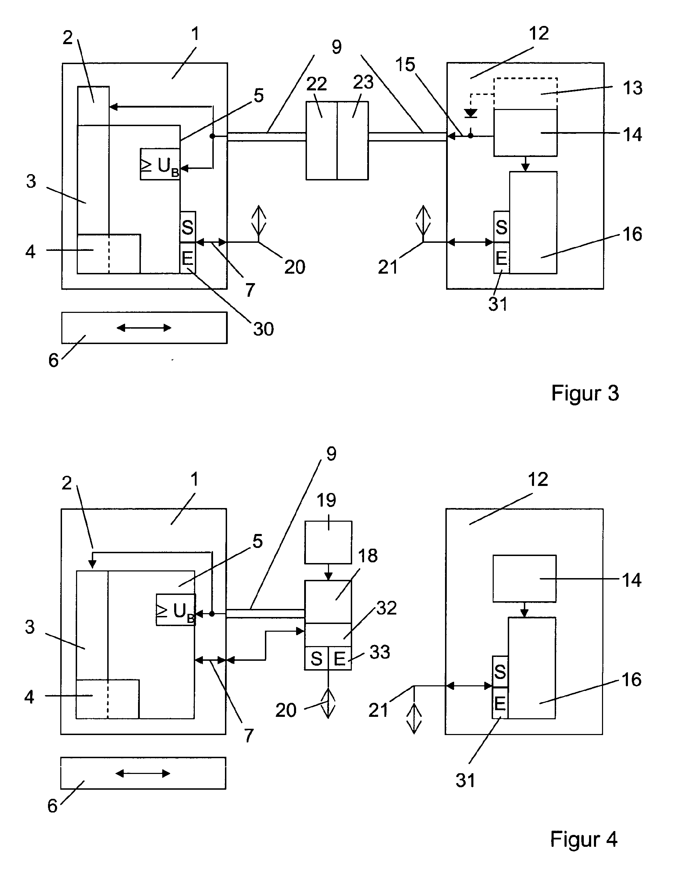

Beim Ausführungsbeispiel der Fig. 3 ist die Hilfsenergie 2 wieder im Messgeber untergebracht. Die Netzversorgung 14 und gegebenenfalls die externe Hilfsenergie 13 versorgen den Messgeber 1 und dessen aufladbare Hilfsenergie 2 über die Leitungen 9, in die ein Stecker 22/23 eingeschaltet ist. Der Datenaustausch erfolgt hier über Funk, weshalb der Messgeber 1 und die Systemsteuerung 12 je mit einer Sendeund Empfangsantenne 20 bzw. 21 und mit je einem Sender und Empfänger 30 bzw. 31 ausgestattet sind. Die Leitungen 9, insbesondere auf der Messgeberseite, können auch hier Lichtleiter sein.

Bei dem Ausführungsbeispiel der Fig. 4 besteht zwischen dem Messgeber 1 und der Systemsteuerung 12 keine Kabelverbindung mehr. Hier ist außerhalb des Messgebers 1 aber in dessen Nähe ein Sender und Empfänger 33 mit Sende- und Empfangsantenne 20 vorgesehen. Die Sende- und Empfangsdaten der Logik 5 werden über eine weitere Logik 32 zur Wandlung der Sende- und Empfangsdaten und dem seriellen Messdatenaustauscher 7 zu der Logik 5 oder von ihr weg über Funk (Sender/Empfänger 31, 33) zur Systemsteuerung 12 übertragen (insbesondere SSI) . Die aufladbare Hilfsenergie 18 ist hier wieder wie in Fig. 2 außerhalb des Messgebers 1 vorgesehen. Sie wird auch hier von einer Aufladevorrichtung 19 aufgeladen, die auch die Netzversorgung besorgt. Hier ist auch eine reduzierte Funkübertragung bei Batteriebetrieb denkbar.

Bezugszeichenliste:

1. Absolutmessgeber
2. aufladbare Hilfsenergie im Messgeber
3. Logik zur Erfassung der Absolutteilstrecken
4. Sensoranordnungen für Absolutwerden
5. Logik Messsignalverarbeitung und Messdatenaustausch
6. Maßstab, Messobjekt
7. serieller Messdatenaustausch auf Messgeberseite
8. Leitungen für Messdatenaustausch
9. Netzversorgungsleitungen
10. Steckerteil auf Messgeberseite
11. Steckerteil auf Steuerungsseite
12. Systemsteuerung
13. externe Hilfsenergie
14. Netzversorgung
15. Netz-/Hilfsnetz-Einspeisung
16. Elektronik der Steuerung
17. serieller Messdatenaustausch auf Steuerungsseite
18. aufladbare Hilfsenergie außerhalb des Messgebers
19. Aufladevorrichtung für Hilfsenergie des Absolutmessgebers
20. Sende- und Empfangsantenne für Funkübertragung auf Messgeberseite
21. Sende- und Empfangsantenne für Funkübertragung auf Steuerungsseite
22. Netzstecker auf Messgeberseite

23. Netzstecker auf Steuerungsseite
30. Sende- und Empfangseinrichtung auf Messgeberseite
31. Sende- und Empfangseinrichtung auf Steuerungsseite
32. Logik zur Wandlung der seriellen Sende- und Empfangsdaten
33. Sende- und Empfangseinrichtung außerhalb des Absolutmessgebers

**Patentansprüche**

1. Absolutmesssystem (1, 12) zur Bestimmung von Winkeln oder Wegen, dessen Messgeber (1) im Normalbetrieb von einer Spannungsversorgung (Netz) (14, 19) versorgt wird, wobei der Messgeber (1) bei Ausfall der Spannungsversorgung (14, 19) auf einen Hilfsnetzbetrieb mit geringerem Energieverbrauch umschaltbar ist, und wobei bei dieser Betriebsart nur eine Grobbestimmung des Messwertes vorgenommen wird, insbesondere nach Patent ...(Patentanmeldung 103 120 45.9), **dadurch gekennzeichnet, dass** zur Aufrechterhaltung des Hilfsnetzbetriebs ein dem Messgeber (1) zugeordneter aufladbarer Speicher (2) vorgesehen ist.

2. Messsystem nach Anspruch 1, **dadurch gekennzeichnet, dass** der Speicher eine Batterie (2) ist.

3. Messsystem nach Anspruch 1, **dadurch gekennzeichnet, dass** der Speicher ein aufladbarer Kondensator ist

4. Messsystem nach Anspruch 1, **dadurch gekennzeichnet, dass** der Speicher eine aufladbare Batterie und ein aufladbarer Kondensator ist.

5. Messsystem nach Anspruch 1, **dadurch gekennzeichnet, dass** der Speicher ein aufladbarer Kondensator und eine nicht aufladbare Batterie ist.

6. Messsystem nach einem der Ansprüche 1 bis 5, **dadurch gekennzeichnet, dass** der aufladbare Speicher (2) wenigstens in der Nähe des Messgebers (1) angeordnet ist.

7. Messsystem nach Anspruch 6, **dadurch gekennzeichnet, dass** der Speicher im Messgeber (1) angeordnet ist.

8. Messsystem nach Anspruch 6, **dadurch gekennzeichnet, dass** der Speicher (18) in dem Messwertgeber seitigen Teil eines Verbindungssteckers (10) angeordnet ist.

9. Messsystem nach einem der Ansprüche 1 bis 8, **dadurch gekennzeichnet, dass** die Aufladung des Speichers (2, 18) durch Solarzellen erfolgt.

10. Messsystem nach einem der Ansprüche 1 bis 8, **dadurch gekennzeichnet, dass** die Aufladung des Speichers (2, 18) mittels elektromagnetischer Wellen erfolgt.

11. Messsystem nach einem der Ansprüche 1 bis 8, **dadurch gekennzeichnet, dass** die Aufladung des Speichers (2, 18) mittels transformatorischer Kopplung erfolgt.

12. Messsystem nach einem der Ansprüche 1 bis 8, **dadurch gekennzeichnet, dass** die Aufladung des Speichers (2, 18) mittels einer durch Bewegung erzeugten Induktion von Feldern erfolgt.

13. Messsystem nach einem der Ansprüche 1 bis 8, **dadurch gekennzeichnet, dass** die Aufladung des Speichers (2, 18) über Leitungen (9) durch das Netz (14) und/oder eine externe Hilfsenergie (13) erfolgt.

14. Messsystem nach Anspruch 13, **dadurch gekennzeichnet, dass** die Leitungen (9) zumindest auf der Messgeber nahen Seite als Lichtleiter ausgebildet sind.

15. Messsystem nach einem der Ansprüche 1 bis 14, **dadurch gekennzeichnet, dass** die Übertragung der Signale zwischen Messgeber (1) und einer Systemsteuerung (12) mittels Sender/Empfänger (31, 33) über Funk erfolgt.

16. Messsystem nach Anspruch 15, **dadurch gekennzeichnet, dass** bei Ausfall der Spannungsversorgung (19) eine reduzierte Funkübertragung (20, 21) bei Batteriebetrieb erfolgt.

Figur 1

Figur 2

Figur 3

Figur 4